# EUROPEAN PATENT SPECIFICATION

(11) **EP 3 846 997 B1**
(45) Date of publication and mention of the grant of the patent: **09.07.2025**
(21) Application number: 19772942.9
(22) Date of filing: 06.09.2019
(51) Int. Cl.: B29C 45/76

(54) **SYSTEMS AND APPROACHES FOR CONTROLLING AN INJECTION MOLDING MACHINE**
SYSTEME UND ANSÄTZE ZUR STEUERUNG EINER SPRITZGIESSMASCHINE
SYSTÈMES ET APPROCHES POUR COMMANDER UNE MACHINE DE MOULAGE PAR INJECTION

(30) Priority: 07.09.2018 US 201862728272 P
(43) Date of publication of application: 14.07.2021
(73) Proprietor: The Procter & Gamble Company, Cincinnati, OH 45202 (US)
(72) Inventor: COLLINS, Bryler, Milford, OH 45150 (US); STIEFEL, Ethan, David, Mason, OH 45040 (US); BIRCHMEIER, Brandon, Michael, Morrow, OH 45152 (US)
(74) Representative: P&G Patent Belgium UK
(86) International application number: PCT/US2019/049840
(87) International publication number: WO 2020/051391

(56) References cited:
- EP-A2- 1 063 073
- EP-A2- 1 418 040
- EP-B1- 1 063 073
- WO-A1-2009/026673
- WO-A1-2012/173224
- DE-A1- 102013 009 368
- JP-A- 2013 256 019
- US-A- 3 642 402
- US-A- 4 579 515
- US-A1- 2005 161 847
- US-A1- 2010 295 199
- US-A1- 2018 169 921

## Description

### FIELD OF THE DISCLOSURE

The present disclosure relates generally to injection molding and, more particularly, to approaches for controlling injection molding machines using specific pressure profiles.

### BACKGROUND

Injection molding is a technology commonly used for high-volume manufacturing of parts constructed of thermoplastic materials. During repetitive injection molding processes, a thermoplastic resin, typically in the form of small pellets or beads, is introduced into an injection molding machine which melts the pellets under heat and pressure. In an injection cycle, the molten material is forcefully injected into a mold cavity having a particular desired cavity shape. The injected plastic is held under pressure in the mold cavity and is subsequently cooled and removed as a solidified part having a shape closely resembling the cavity shape of the mold. A single mold may have any number of individual cavities which can be connected to a flow channel by a gate that directs the flow of the molten resin into the cavity. A typical injection molding procedure generally includes four basic operations: (1) heating the plastic in the injection molding machine to allow the plastic to flow under pressure; (2) injecting the melted plastic into a mold cavity or cavities defined between two mold halves that have been closed; (3) allowing the plastic to cool and harden in the cavity or cavities while under pressure; and (4) opening the mold halves and ejecting the part from the mold. Upon ejecting the part from the mold, the device that injects the melted plastic into the mold cavity or cavities (e.g., a screw or an auger) enters a recovery phase in which it returns to an original position.

In these systems, a control system controls the injection molding process according to an injection cycle that defines a series of control values for the various components of the injection molding machine. For example, the injection cycle can be driven by a fixed and/or a variable melt pressure profile wherein the controller uses (for example) sensed pressures at a nozzle as the input for determining a driving force applied to the material. The injection cycle may also be controlled by a fixed or variable screw velocity profile wherein the control senses the velocity of the injection screw as input for determining the driving speed applied to the material.

Changes in molding conditions can significantly affect properties of the molten plastic material. As an example, material specification differences between resin batches and changes in environmental conditions (such as changes in ambient temperature or humidity) can raise or lower the viscosity of the molten plastic material. When viscosity of the molten plastic material changes, quality of the molded part may be adversely impacted. For example, if the viscosity of the molten plastic material increases, the molded part may be "under-packed" or less dense, due to a higher required pressure, after filling, to achieve optimal part quality. Conversely, if the viscosity of the molten plastic material decreases, the molded part may experience flashing as the thinner molten plastic material is pressed into the seam of the mold cavity. Furthermore, recycled plastic material that is mixed with virgin material may impact the melt flow index (MFI) of the combined plastic material. Inconsistent mixing of the two materials may also create MFI variation between cycles.

Some conventional injection molding machines do not adjust the molding cycle to account for changes in viscosity, MFI, or other material properties. As a result, these injection molding machines may produce lower quality parts, which must be removed during quality-control inspections, thereby leading to operational inefficiencies. Some systems may account for changes in material viscosities by sensing a mold characteristic (e.g., a cavity pressure measurement) and reacting to the characteristic. For example, if the viscosity of the material increases, the cavity pressure measurement will be delayed, and thus the system will react upon sensing this delay. Conversely, if the viscosity of the material decreases, the cavity pressure measurement will occur earlier, and thus the system will react upon this earlier measurement. In other systems, a driving pressure may be adjusted in order to normalize a time required to measure an initial cavity pressure value, thereby compensating for viscosity changes that may occur in the material. However, these systems are still reactionary to the oftentimes variable incoming viscosity of the material.

US 3 642 402 A recites a control for an injection molding machine measuring the viscosity characteristics of the plasticized material by monitoring pressure in the melt stream being injected at a predetermined position of the forward stroke of the ram during flow of the material into the mold.

US 2005/161847 A1 recites a controller of the injection unit arranged to continuously rotate the screw during both conventional plasticizing operation and shot injection. In this way the RS unit is more efficient, utilizing less energy and producing greater resin output. The injection unit includes a non-return valve adjacent a nozzle, which non-return valve is either configured to rotate with the screw to reduce wear or presented as a ball check style noon-return valve.

EP 1418040 A2 recites an injection screw rotated at a set speed and retreated by performing back pressure control for keeping a resin pressure at a set pressure. When the retreat position of the screw reaches a change point set nearby a set metering completion position, the back pressure control for keeping the resin pressure at a set resin pressure is stopped and a command for positioning the screw at a metering completion position is output to position the screw at the metering completion position.

### SUMMARY

While the invention is defined in the independent claims, further aspects of the invention are set forth in the dependent claims, the drawings and the following description.

Embodiments within the scope of the present invention are directed to the control of injection molding machines to produce repeatably consistent parts by using machine parameters and measurements to ensure the molten plastic material being ejected maintains a desired viscosity (and/or density) value and/or falls within a specified allowable range of viscosity (and/or density) values. Systems and approaches for controlling the injection molding machine include injecting a molten polymer into the mold cavity according to the injection cycle using a screw that moves from a first position to a second position. Upon completion of the injection cycle, a recovery profile commences where the screw is moved to the first position. Using a sensor, at least one variable is measured during the recovery profile. At least one operational parameter of the injection molding machine is adjusted based on the at least one measured variable during the recovery profile. In some forms, a target variable recovery profile may be first created and relied upon during commencement of the recovery profile.

In these examples, the at least one operational parameter may be in the form of at least one of a back pressure value or a screw rotational speed. The at least one variable may be in the form of a pressure (e.g., a backpressure) value of molten polymer being urged towards a nozzle of the screw. In some forms, the sensor is located at a leading end of the screw near the nozzle. The sensor may alternatively be located at any position ahead of a check ring of the screw.

In some approaches, the at least one variable may be in the form of a nozzle pressure. The operational parameter may be in the form of an adjustable back pressure having a plurality of discrete set points. The back pressure is adjusted according to the sensed nozzle pressure. In other approaches, the operational parameter may be in the form of a continuously variable back pressure that is adjusted according to the sensed nozzle pressure.

In accordance with another aspect, an injection molding machine may include an injection unit having a mold forming a mold cavity and a screw that moves from a first position to a second position, a controller adapted to control operation of the injection molding machine according to an injection cycle and a recovery profile, and a sensor coupled to the injection molding machine and the controller. The injection unit is adapted to receive and inject a molten plastic material into the mold cavity via the screw to form a molded part. The sensor is adapted to measure at least one variable during the recovery profile. Upon completion of the injection cycle, the controller commences the recovery profile where the screw is moved to the first position. Further, the controller adjusts an operational parameter of the injection molding machine based on the at least one measured variable.

In accordance with a third aspect, a non-transitory computer-readable storage medium stores processor-executable instructions. When executed, the instructions cause one or more processors to inject a molten polymer into the mold cavity according to the injection cycle using a screw that moves from a first position to a second position. Upon completion of the injection cycle, a recovery profile commences in which the screw is moved to the first position. Using a sensor, at least one variable is measured during the recovery profile. At least one operational parameter of the injection molding machine is measured based on the at least one measured variable during the recovery profile.

In accordance with a fourth aspect, a client device includes one or more processors, one or more interfaces, and transitory computer-readable storage medium stores processor-executable instructions. When executed, the instructions cause one or more processors to inject a molten polymer into the mold cavity according to the injection cycle using a screw that moves from a first position to a second position. Upon completion of the injection cycle, a recovery profile commences in which the screw is moved to the first position. Using a sensor, at least one variable is measured during the recovery profile. At least one operational parameter of the injection molding machine is measured based on the at least one measured variable during the recovery profile.

### BRIEF DESCRIPTION OF THE DRAWINGS

While the specification concludes with claims particularly pointing out and distinctly claiming the subject matter that is regarded as the present invention, it is believed that the invention will be more fully understood from the following description taken in conjunction with the accompanying drawings. Some of the figures may have been simplified by the omission of selected elements for the purpose of more clearly showing other elements. Such omissions of elements in some figures are not necessarily indicative of the presence or absence of particular elements in any of the exemplary embodiments, except as may be explicitly delineated in the corresponding written description. None of the drawings are necessarily to scale. For example, the dimensions and/or relative positioning of some of the elements in the figures may be exaggerated relative to other elements to help to improve understanding of various embodiments of the present invention.
FIG. 1 illustrates a schematic view of an example first injection molding machine having a controller coupled thereto in accordance with various embodiments of the present disclosure;
FIG. 2 illustrates an example injection molding cycle in accordance with various embodiments of the present disclosure;
FIG. 3 illustrates an example recovery profile in accordance with various embodiments of the present disclosure;
FIG. 4 illustrates an alternative example recovery profile in accordance with various embodiments of the present disclosure; and
FIG. 5 illustrates a further alternative example recovery profile in accordance with various embodiments of the present disclosure.

### DETAILED DESCRIPTION

Generally speaking, aspects of the present disclosure include systems and approaches for controlling an injection molding machine where operational parameters are adjusted to ensure a consistent molten material viscosity. In these systems and approaches, upon completion of the injection cycle (i.e., during a recovery portion), a recovery profile commences that is at least partially dependent on a desired operational pattern (i.e., in a closed loop manner) that is indicative of (and/or results in) high quality parts that remain within desired dimensional tolerances. Accordingly, the system can adjust operational parameters of the recovery process as needed in order for its output to match that of the operational pattern. As used herein, the phrase "commencing a pattern recognition portion of the recovery portion" means a controller commences the operations that cause the injection molding machine to operate in a manner that depends on the desired operational recovery profile or pattern.

In some examples, the operational pattern may be in the form of an operational recovery curve that can be identified during a validation phase. One such example of a suitable operational recovery curve is a back pressure curve, which in some forms may simply be a single set point. Because the back pressure exerted on the screw impacts viscosity of the molten plastic material, by measuring and adjusting the back pressure, the viscosity of the molten plastic material may be controlled. The back pressure curve may have a correlation to an ideal viscosity of the molten plastic material. As will be discussed in further detail below, the system may adjust operational parameters of the injection molding machine in order for its output to match that of the previously identified back pressure curve. By ensuring the machine's output during the recovery portion matches the back pressure curve, the described system will in turn ensure that the viscosity remains constant or near-constant; meaning in a subsequent injection cycle, the plastic material will begin with uniform or near-uniform viscosities, thereby limiting or reducing changes to the quality of the molded part.

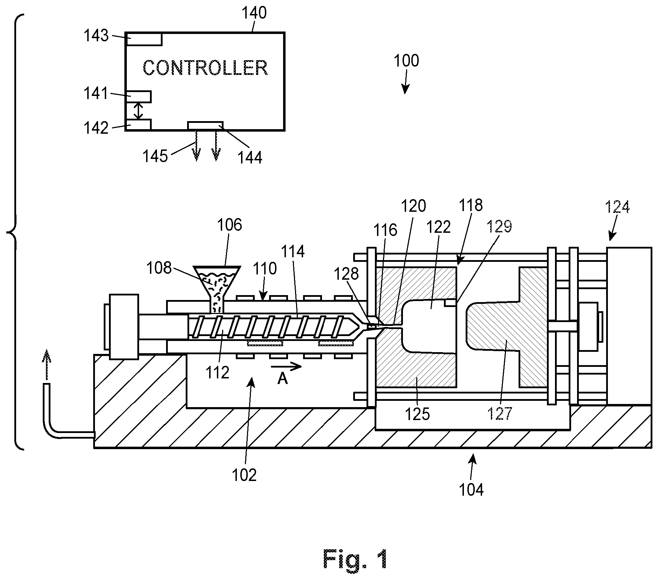

Turning to the drawings, an injection molding process is herein described. The approaches described herein may be suitable for electric presses, servo-hydraulic presses, hydraulic presses, and other known machines. As illustrated in FIG. 1, the injection molding machine 100 includes an injection unit 102 and a clamping system 104. The injection unit 102 includes a hopper 106 adapted to accept material in the form of pellets 108 or any other suitable form. In many of these examples, the pellets 108 may be a polymer or polymer-based material. Other examples are possible.

The hopper 106 feeds the pellets 108 into a heated barrel 110 of the injection unit 102. Upon being fed into the heated barrel 110, the pellets 108 may be driven to the end of the heated barrel 110 by a reciprocating screw 112. The heating of the heated barrel 110 and the compression of the pellets 108 by the reciprocating screw 112 causes the pellets 108 to melt, thereby forming a molten plastic material 114. The molten plastic material 114 is typically processed at a temperature selected within a range of about 130°C to about 410°C (with manufacturers of particular polymers typically providing injection molders with recommended temperature ranges for given materials).

The reciprocating screw 112 advances forward from a first position 112a to a second position 112b and forces the molten plastic material 114 toward a nozzle 116 to form a shot of plastic material that will ultimately be injected into a mold cavity 122 of a mold 118 via one or more gates 120 which direct the flow of the molten plastic material 114 to the mold cavity 122. In other words, the reciprocating screw 112 is driven to exert a force on the molten plastic material 114. In other embodiments, the nozzle 116 may be separated from one or more gates 120 by a feed system (not illustrated). The mold cavity 122 is formed between the first and second mold sides 125, 127 of the mold 118 and the first and second mold sides 125, 127 are held together under pressure via a press or clamping unit 124.

The press or clamping unit 124 applies a predetermined clamping force during the molding process which is greater than the force exerted by the injection pressure acting to separate the two mold halves 125, 127, thereby holding together the first and second mold sides 125, 127 while the molten plastic material 114 is injected into the mold cavity 122. To support these clamping forces, the clamping system 104 may include a mold frame and a mold base, in addition to any other number of components, such as a tie bar.

Once the shot of molten plastic material 114 is injected into the mold cavity 122, the reciprocating screw 112 halts forward movement. The molten plastic material 114 takes the form of the mold cavity 122 and cools inside the mold 118 until the plastic material 114 solidifies. Upon solidifying, the press 124 releases the first and second mold sides 115, 117, which are then separated from one another. The finished part may then be ejected from the mold 118. The mold 118 may include any number of mold cavities 122 to increase overall production rates. The shapes and/or designs of the cavities may be identical, similar to, and/or different from each other. For instance, a family mold may include cavities of related component parts intended to mate or otherwise operate with one another. In some forms, an "injection cycle" is defined as of the steps and functions performed between commencement of injection and ejection. Upon completion of the injection cycle, a recovery profile is commenced during which the reciprocating screw 112 returns to the first position 112a.

The injection molding machine 100 also includes a controller 140 communicatively coupled with the machine 100 via connection 145. The connection 145 may be any type of wired and/or wireless communications protocol adapted to transmit and/or receive electronic signals. In these examples, the controller 140 is in signal communication with at least one sensor, such as, for example, sensor 128 located in or near the nozzle 116 and/or a sensor 129 located in or near the mold cavity 122. In some examples, the sensor 128 is located at a leading end of the screw 112 and the sensor 129 is located in a manifold or a runner of the injection machine 100. Alternatively, the sensor 128 may be located at any position ahead of the check ring of the screw 112. It is understood that any number of additional real and/or virtual sensors capable of sensing any number of characteristics of the mold 118 and/or the machine 100 may be used and placed at desired locations of the machine 100. As a further example, any type of sensor capable of detecting flow front progression in the mold cavity 122 may be used.

The controller 140 can be disposed in a number of positions with respect to the injection molding machine 100. As examples, the controller 140 can be integral with the machine 100, contained in an enclosure that is mounted on the machine, contained in a separate enclosure that is positioned adjacent or proximate to the machine, or can be positioned remote from the machine. In some embodiments, the controller 140 can partially or fully control functions of the machine via wired and/or wired signal communications as known and/or commonly used in the art.

The sensor 128 may be any type of sensor adapted to measure (either directly or indirectly) one or more characteristics of the molten plastic material 114 and/or portions of the machine 100. The sensor 128 may measure any characteristics of the molten plastic material 114 that are known and used in the art, such as, for example, a back pressure, temperature, viscosity, flow rate, hardness, strain, optical characteristics such as translucency, color, light refraction, and/or light reflection, or any one or more of any number of additional characteristics which are indicative of these. The sensor 128 may or may not be in direct contact with the molten plastic material 114. In some examples, the sensor 128 may be adapted to measure any number of characteristics of the injection molding machine 100 and not just those characteristics pertaining to the molten plastic material 114. As an example, the sensor 128 may be a pressure transducer that measures a melt pressure (during the injection cycle) and/or a back pressure (during the recovery profile) of the molten plastic material 114 at the nozzle 116.

As previously noted, the sensor 128 may measure a back pressure exerted on the screw 112, but unlike in conventional systems where back pressure is measured on a trailing end of the screw 112, in the present approaches, back pressure is measured on a leading end of the screw 112. This positioning allows the sensor 128 to accurately measure the compressive pressure on the molten plastic material 114 as compared to measurements obtained at the trailing end of the screw 112 due to the compressible nature of the molten plastic material 114, draw in the barrel, and other factors.

The sensor 128 generates a signal which is transmitted to an input of the controller 140. If the sensor 128 is not located within the nozzle 116, the controller 140 can be set, configured, and/or programmed with logic, commands, and/or executable program instructions to provide appropriate correction factors to estimate or calculate values for the measured characteristic in the nozzle 116. For example, as previously noted, the sensor 128 may be programmed to measure a back pressure during a recovery profile. The controller 140 may receive these measurements and may translate the measurements to other characteristics of the molten plastic material 114, such as a viscosity value.

Similarly, the sensor 129 may be any type of sensor adapted to measure (either directly or indirectly) one or more characteristics of the molten plastic material 114 to detect its presence and/or condition in the mold cavity 122. In various embodiments, the sensor 129 may be located at or near an end-of-fill position in the mold cavity 122. The sensor 129 may measure any number of characteristics of the molten plastic material 114 and/or the mold cavity 122 that are known in the art, such as pressure, temperature, viscosity, flow rate, hardness, strain, optical characteristics such as translucency, color, light refraction, and/or light reflection, and the like, or any one or more of any number of additional characteristics indicative of these. The sensor 129 may or may not be in direct contact with the molten plastic material 114. As an example, the sensor 129 may be a pressure transducer that measures a cavity pressure of the molten plastic material 114 within the cavity 122. The sensor 129 generates a signal which is transmitted to an input of the controller 140. Any number of additional sensors may be used to sense and/or measure operating parameters.

The controller 140 is also in signal communication with a screw control 126. In some embodiments, the controller 140 generates a signal which is transmitted from an output of the controller 140 to the screw control 126. The controller 140 can control any number of characteristics of the machine, such as injection pressures (by controlling the screw control 126 to advance the screw 112 at a rate which maintains a desired value corresponding to the molten plastic material 114 in the nozzle 116), barrel temperatures, clamp closing and/or opening speeds, cooling time, inject forward time, overall cycle time, pressure set points, ejection time, screw recovery speed, back pressure values exerted on the screw 112, and screw velocity.

The signal or signals from the controller 140 may generally be used to control operation of the molding process such that variations in material viscosity, mold temperatures, melt temperatures, and other variations influencing filling rate are taken into account by the controller 140. Alternatively or additionally, the controller 140 may make necessary adjustments in order to control for material characteristics such as viscosity. Adjustments may be made by the controller 140 in real time or in near-real time (that is, with a minimal delay between sensors 128, 129 sensing values and changes being made to the process), or corrections can be made in subsequent cycles. Furthermore, several signals derived from any number of individual cycles may be used as a basis for making adjustments to the molding process. The controller 140 may be connected to the sensors 128, 129, the screw control 126, and or any other components in the machine 100 via any type of signal communication approach known in the art.

The controller 140 includes software 141 adapted to control its operation, any number of hardware elements 142 (such as, for example, a non-transitory memory module and/or processors), any number of inputs 143, any number of outputs 144, and any number of connections 145. The software 141 may be loaded directly onto a non-transitory memory module of the controller 140 in the form of a non-transitory computer readable medium, or may alternatively be located remotely from the controller 140 and be in communication with the controller 140 via any number of controlling approaches. The software 141 includes logic, commands, and/or executable program instructions which may contain logic and/or commands for controlling the injection molding machine 100 according to a mold cycle. The software 141 may or may not include an operating system, an operating environment, an application environment, and/or a user interface.

The hardware 142 uses the inputs 143 to receive signals, data, and information from the injection molding machine being controlled by the controller 140. The hardware 142 uses the outputs 144 to send signals, data, and/or other information to the injection molding machine. The connection 145 represents a pathway through which signals, data, and information can be transmitted between the controller 140 and its injection molding machine 100. In various embodiments this pathway may be a physical connection or a non-physical communication link that works analogous to a physical connection, direct or indirect, configured in any way described herein or known in the art. In various embodiments, the controller 140 can be configured in any additional or alternate way known in the art.

The connection 145 represents a pathway through which signals, data, and information can be transmitted between the controller 140 and the injection molding machine 100. In various embodiments, these pathways may be physical connections or non-physical communication links that work analogously to either direct or indirect physical connections configured in any way described herein or known in the art. In various embodiments, the controller 140 can be configured in any additional or alternate way known in the art.

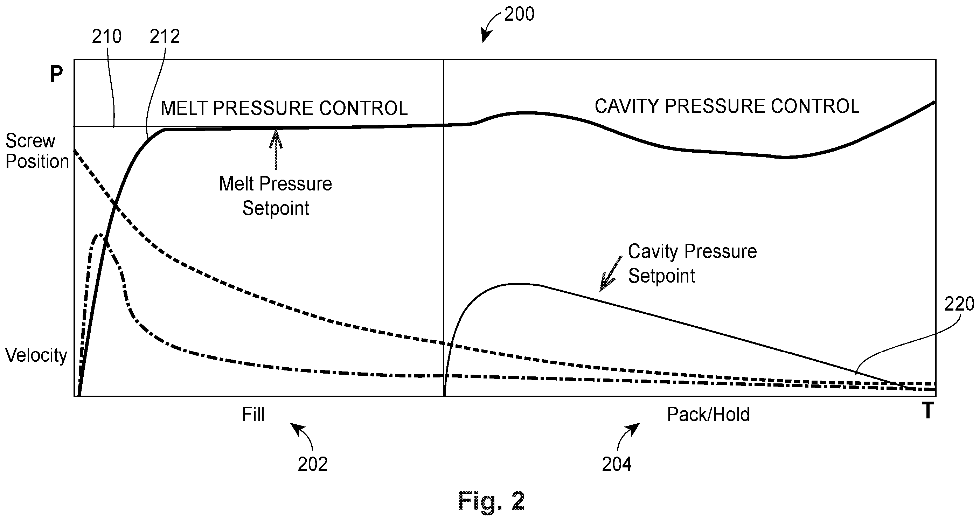

As illustrated in FIG. 2, an example injection cycle 200 of a conventional injection molding machine 100 includes a number of distinct stages. While the illustrated example depicts a substantially constant pressure profile, other pressure profiles (e.g., a velocity controlled, high pressure injection molding process) may be used in conjunction with the approaches described herein.

During a first stage 202, the molten plastic material 114 first fills the mold cavity 122. In this stage 202, the controller 140 increases the melt pressure to a substantially constant pressure value (e.g., approximately 10,000 psi) and then causes the melt pressure to hold at or close to this pressure value while the molten plastic material 114 fills the mold cavity 122. The molten plastic material 114 then enters a pack/hold stage 204 where the melt pressure is maintained to ensure that all gaps in the mold cavity 122 are back filled. In these systems, the mold cavity 122 is filled from the end of the flow channel back towards the gate 120. As a result, molten plastic material 114 in various stages of solidification is packed upon itself. In these approaches, the melt pressure is either raised or lowered based on the amount of cavity pressure measured. The degree of change is dependent on the amount of cavity pressure and a multiplier, as will be discussed below, which are determined during process validation and adjusted as needed.

During this process, upon the mold cavity 122 being substantially and/or completely filled with molten plastic material 114, the sensed pressure within the mold cavity 122 will eventually become a non-zero value. The time it takes for the injection cycle to reach a non-zero cavity pressure can be defined as a "step time", which is equal to the time required to fill the mold cavity 122 (e.g., a "fill time") plus a process factor adjustment ("PFA") value. PFA is a multiplier to the amount of cavity pressure measured in the mold. As cavity pressure is measured, an adjustment to the melt pressure set point takes place based on a multiplier that is determined during the validation of the process (PFA). This multiplier can be adjusted as necessary to make a quality part. In the illustrated example of FIG. 2, the overall step time corresponds to the duration of stage 202, and therefore is intended to remain a fixed value. However, in some examples, the actual step time for each injection cycle may vary depending on material characteristics.

As illustrated by curve 220 in FIG. 2, which depicts a sensed cavity pressure, during the injection cycle and upon the cavity being substantially completely filled, the cavity pressure rapidly increases to a maximum value, and subsequently decreases until it returns to a minimal value as the injection cycle is completed. In conventional injection systems, the cavity pressure curve 220 is merely an output of the injection system which may be used to provide data representative of the quality of the injection cycle. As previously noted, during a validation stage, a number of varying injection cycles are performed until a molded part having ideal and/or desirable characteristics is obtained. This ideal injection cycle will produce as an output a corresponding ideal pattern that is at least partially based on the fill time, fill pressure, and material characteristics. Accordingly, once it is determined that a suitable injection cycle has been performed that produces parts having suitable physical characteristics, the resulting cavity pressure curve, such as illustrated cavity pressure curve 220 may be used as a driving variable for the injection cycle. For example, U.S. Prov. Appl. Nos. 62/688,482 and 62/688,491, both filed on June 22, 2018 describe approaches for using a cavity pressure curve as an input for an injection cycle. In a similar manner, the suitable injection cycle may also produce an ideal recovery pattern which may be used during the recovery profile portion. This ideal recovery pattern may or may not include variable operational values.

As previously stated, during an injection molding cycle, the sensors 128, 129 are adapted to measure at least one variable (such as, for example, a back pressure value) related to operation of the machine 100. During operation and upon completion of the injection cycle, the controller 140 commences a recovery profile which may be stored in the software 141. In some examples, the recovery profile may be commenced upon the controller 140 sending a signal to the machine that causes the mold cavity 122 to open and to eject the part from the mold 118. The part may then complete necessary continued expansion and crosslinking to form a structurally sound molded part. For example, a structurally sound molded part may be free of divots, dwells, flash, partial fills, burns, tears, minimal imperfections such as sink marks and/or swirls on the surface layer, weakness at thickness changes, and may also have uniformity of mechanical properties.

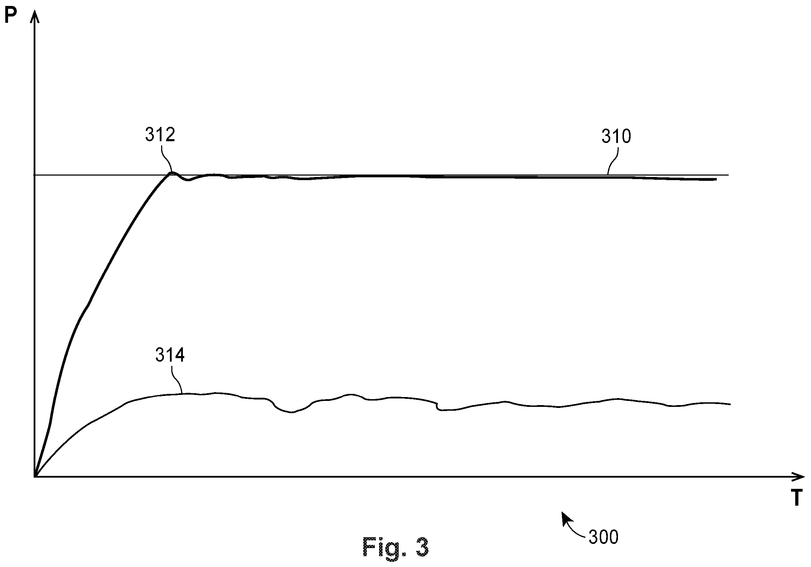

As illustrated in FIG. 3, upon completion of the injection cycle 200, a recovery profile 300 commences where the screw 112 returns to the first position 112a. During the recovery profile 300, an ideal recovery pattern in the form of an ideal back pressure set point 310 is identified and used as an input to control operation of the injection molding machine 100. In other words, in this example, the back pressure set point 310 is used as the input which determines how the machine 100 should operate, while the sensor 128 provides feedback to the controller 140 to determine whether adjustments should be made to match the back pressure set point 310. This back pressure set point 310 is used as a proxy for the viscosity of the molten plastic material 114, meaning, by operating the machine 100 to obtain a desired back pressure value, the machine 100 will in turn obtain a desired molten plastic material 114 viscosity.

As illustrated in FIG. 3, a back pressure curve 312 reflects the back pressure measured by the sensor 128. Accordingly, the controller 140 may adjust the pressure exerted on the screw 112 in order to maintain the back pressure curve 312 to the back pressure profile 310. Depending on the type of machine 100 being used, different valves and/or motors may be used to maintain and/or adjust the pressure exerted on the back of the screw 112. For example, a servo motor may be used to turn the screw drive and control movement of the screw 112, a flow control valve may be used, which controls the quantity of hydraulic fluid being exerted on the screw 112, or a proportional valve may be used.

In operation, the controller 140 may cause the screw 112 to selectively increase and/or decrease the back pressure and thus shear the molten plastic material 114 more or less, respectively, thereby making the screw 112 expend different amounts of energy to return to the first position 112a. Accordingly, the screw 112 will impart additional heat into the molten plastic material 114, thereby reducing its viscosity. The opposite operation may be performed in order to increase the viscosity of the molten plastic material 114. As a result, the controller 140 will match the back pressure curve 312 to the back pressure profile 310, and thus the corresponding viscosity of the molten plastic material 114 will remain constant and/or relatively constant. As illustrated by the screw velocity curve 314 in FIG. 3, the controller 140 may adjust the screw velocity as a way to match the back pressure curve 312 with the back pressure profile 310. Other examples of adjustments are possible, such as adjustments to the size and velocity of decompression, or temperature adjustments, in instances when a gradual change in viscosity occurs. Other instances may require a change in the back pressure setpoint or profile. Indicators of such instances may include variation in recovery time or changes in velocities, pressures, and times during the injection stage of the cycle.

Additionally or separately, the controller 140 may set an upper and/or a lower limit on acceptable measured back pressure values when compared to the back pressure profile 310. In one example, the upper and lower limits of the measured values may be within approximately 5% of the back pressure profile 310. Other examples of suitable limits are possible.

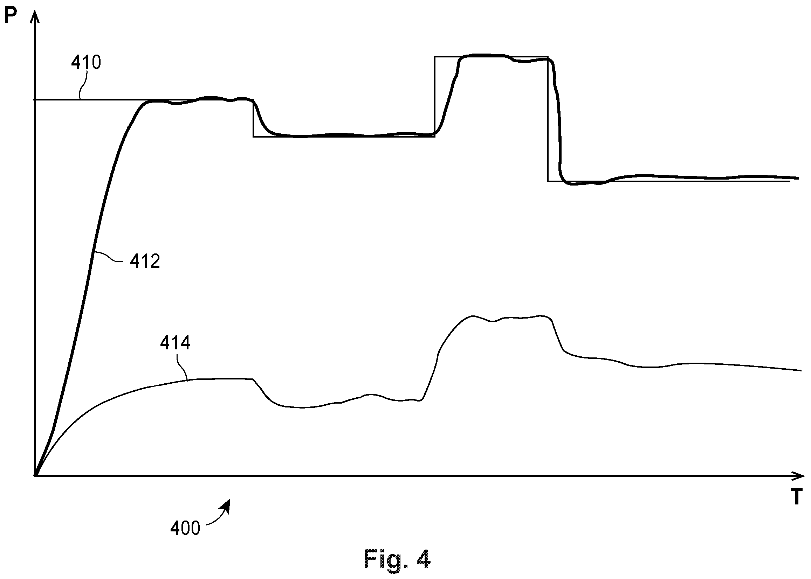

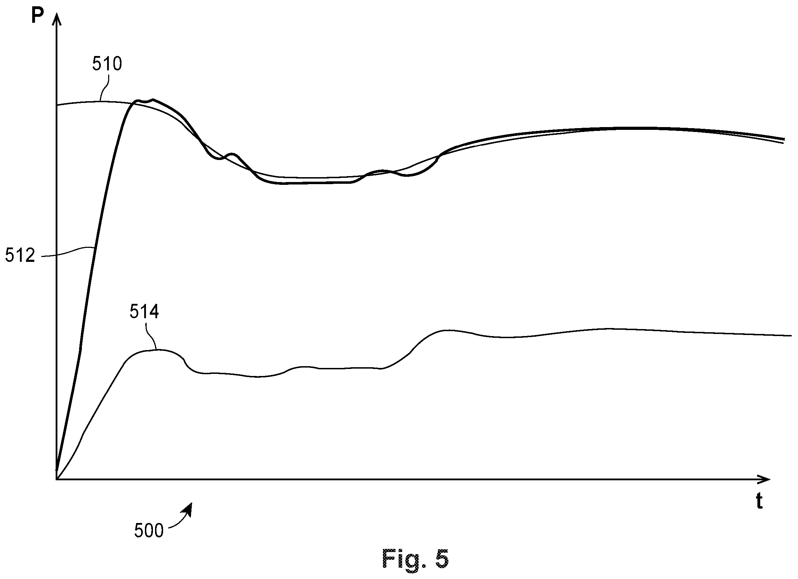

Turning to FIGS. 4 and 5, it may be determined during the validation stage that applying a variable back pressure during the recovery profile 400, 500 may result in a desired molten plastic material 114 viscosity. Accordingly, FIG. 4 illustrates a stepped back pressure profile 410, and FIG. 5 illustrates a continuously variable back pressure profile 510, each of which may selectively increase and/or decrease the back pressure. In each of these examples, the controller 140 will match the back pressure curve 412, 512 to the back pressure profiles 410, 510 by adjusting any one (or a combination) of the back pressure, screw velocity, and/or other measurements. Other examples of suitable back pressure profiles are possible.

In some approaches, other operational parameters or characteristics may be used to determine that changes should be made to the operational parameters of the machine 100 during the recovery profile 300, 400, 500. For example, if, during recovery, it is determined that it is taking longer for the screw 112 to fully recover and return to the first position 112a, this may mean the viscosity of the molten plastic material 114 has increased. Accordingly, the controller 140 may increase the back pressure as previously described to reduce the viscosity. Further, it will be appreciated that the viscosity of the molten plastic material 114 is but one example of a characteristic that may be controlled for. In other examples, a desired melt density, decompression, and/or melt travel value may be proactively controlled for. Other examples are possible.

In some examples, the sensor 128 may be disposed remotely from the screw 112, yet may still be in communication therewith. For example, U.S. App. No. 15,216,762, filed July 22, 2016, describes the use of one or more external sensors as virtual sensors. Such a sensor or sensor arrangement may be used interchangeably with the sensor 128 described herein.

Further, in some examples, the controller 140 may incorporate machine learning techniques to automatically identify appropriate conditions for adjusting the back pressure to obtain a desired viscosity of the molten plastic material 114. For example, the controller 140 may establish a scoring metric that determines when to adjust specific parameters of the machine 100 based on sensed input(s). Other examples are possible.

The above-described approaches may be used in conjunction with any injection process where the previously-identified pattern is used to drive at least a portion of the recovery profile. These approaches may be used in the formation of any number of different molded parts constructed from a variety of materials such as, for example silicone and metal parts.

Those skilled in the art will recognize that a wide variety of modifications, alterations, and combinations can be made with respect to the above described embodiments without departing from the scope of the invention, and that such modifications, alterations, and combinations are to be viewed as being within the scope of the invention as defined in the appended claims.

## Claims

1. A method for controlling an injection molding machine having a mold forming a mold cavity, the injection molding machine being controlled according to an injection cycle, the method comprising:
injecting a molten polymer into the mold cavity according to the injection cycle using a screw that moves from a first position to a second position;
upon completion of the injection cycle, commencing a recovery profile in which the screw is moved to the first position;
measuring, using a sensor, at least one variable during the recovery profile; and
adjusting at least one operational parameter of the injection molding machine based on the at least one measured variable during the recovery profile
**characterized in that** the at least one variable comprises a nozzle pressure, and the operational parameter comprises a back pressure, the back pressure being adjusted according to the sensed nozzle pressure.

2. The method of claim 1, further comprising creating, by one or more processors, a target variable recovery profile for an injection cycle of the injection molding machine.

3. The method of claim 1 or claim 2, wherein the at least one operational parameter comprises at least one of a back pressure set point or a screw rotational speed.

4. The method of any one of claims 1-3, wherein the at least one variable comprises a pressure value of molten polymer being urged towards a nozzle of the screw.

5. The method of any one of claims 1-4, wherein the at least one variable comprises a backpressure value.

6. The method of any one of claims 1-5, wherein the sensor is located at a leading end of the screw near the nozzle, and/or wherein the sensor is located at a position ahead of a check ring of the screw.

7. The method of any one of claims 1-6, wherein the at least one variable comprises a nozzle pressure, and wherein the operational parameter comprises an adjustable back pressure having a plurality of discrete set points, the back pressure being adjusted according to the sensed nozzle pressure.

8. An injection molding machine comprising:
an injection unit having a mold forming a mold cavity and a screw that moves from a first position to a second position, the injection unit adapted to receive and inject a molten plastic material into the mold cavity via the screw to form a molded part;
a controller adapted to control operation of the injection molding machine according to an injection cycle and a recovery profile;
a sensor coupled to the injection molding machine and the controller, the sensor adapted to measure at least one variable during the recovery profile;
wherein upon completion of the injection cycle, the controller commences the recovery profile in which the screw is moved to the first position, the controller further adjusts an operational parameter of the injection molding machine based on the at least one measured variable
**characterized in that** the at least one variable comprises a nozzle pressure, and the operational parameter comprises a back pressure, the back pressure being adjusted according to the sensed nozzle pressure.

9. The injection molding machine of claim 8, wherein the operational parameter comprises at least one of a back pressure set point or a screw rotational speed.

10. The injection molding machine of claim 8 or claim 9, wherein the at least one variable comprises a pressure value of molten polymer being urged towards a nozzle of the screw.

11. The injection molding machine of any one of claims 8-10, wherein the at least one variable comprises a backpressure value.

12. The injection molding machine of any one of claims 8-11, wherein the sensor is located at a leading end of the screw near the nozzle, and/or wherein the sensor is located at a position ahead of a check ring of the screw.

13. The injection molding machine of any one of claims 8-12, wherein the at least one variable comprises a nozzle pressure, and wherein the operational parameter comprises a continuously variable back pressure, the variable back pressure being adjusted according to the sensed nozzle pressure.

14. A non-transitory computer-readable storage medium storing processor-executable instructions that, when executed, cause the injection molding machine of claims 8 to 13 to:
inject a molten polymer into the mold cavity according to the injection cycle using a screw that moves from a first position to a second position;
upon completion of the injection cycle, commence a recovery profile in which the screw is moved to the first position;
measure, using a sensor, at least one variable during the recovery profile; and
adjust at least one operational parameter of the injection molding machine based on the at least one measured variable during the recovery profile;
**characterized in that** the at least one variable comprises a nozzle pressure, and the operational parameter comprises a back pressure, the back pressure being adjusted according to the sensed nozzle pressure.

15. A client device comprising:
one or more processors;
one or more interfaces;
the injection molding machine of claims 8 to 13;
a non-transitory computer-readable memory storing thereon instructions that, when executed by the one or more processors, cause the client device to:
inject a molten polymer into the mold cavity according to the injection cycle using a screw that moves from a first position to a second position;
upon completion of the injection cycle, commence a recovery profile in which the screw is moved to the first position;
measure, using a sensor, at least one variable during the recovery profile; and
adjust at least one operational parameter of the injection molding machine based on the at least one measured variable during the recovery profile
**characterized in that** the at least one variable comprises a nozzle pressure, and the operational parameter comprises a back pressure, the back pressure being adjusted according to the sensed nozzle pressure.

## Patentansprüche

1. Verfahren zum Steuern einer Spritzgießmaschine, die eine Gießform aufweist, die einen Gießformhohlraum ausbildet, wobei die Spritzgießmaschine gemäß einem Einspritzzyklus gesteuert wird, das Verfahren umfassend:
Einspritzen eines geschmolzenen Polymers in den Gießformhohlraum gemäß dem Einspritzzyklus unter Verwendung einer Schnecke, die sich von einer ersten Position in eine zweite Position bewegt;
nach Abschluss des Einspritzzyklus, Beginnen eines Rückstellungsprofils, bei dem die Schnecke in die erste Position bewegt wird;
Messen, unter Verwendung eines Sensors, wenigstens einer Variablen während des Rückstellungsprofils; und
Einstellen wenigstens eines Betriebsparameters der Spritzgießmaschine basierend auf der wenigstens einen gemessenen Variable während des Rückstellungsprofils,
**dadurch gekennzeichnet, dass** die wenigstens eine Variable einen Düsendruck umfasst und der Betriebsparameter einen Gegendruck umfasst, wobei der Gegendruck gemäß dem erfassten Düsendruck eingestellt wird.

2. Verfahren nach Anspruch 1, ferner umfassend ein Erstellen, durch einen oder mehrere Prozessoren, eines Rückstellungsprofils einer Zielvariablen für einen Einspritzzyklus der Spritzgießmaschine.

3. Verfahren nach Anspruch 1 oder 2, wobei der wenigstens eine Betriebsparameter wenigstens eines von einem Gegendrucksollwert oder einer Schneckendrehgeschwindigkeit umfasst.

4. Verfahren nach einem der Ansprüche 1 bis 3, wobei die wenigstens eine Variable einen Druckbetrag eines geschmolzenen Polymers umfasst, das in Richtung einer Düse der Schnecke gedrückt wird.

5. Verfahren nach einem der Ansprüche 1 bis 4, wobei die wenigstens eine Variable einen Gegendruckbetrag umfasst.

6. Verfahren nach einem der Ansprüche 1 bis 5, wobei der Sensor an einem Vorderende der Schnecke nahe der Düse angeordnet ist und/oder wobei der Sensor an einer Position vor einem Prüfring der Schnecke angeordnet ist.

7. Verfahren nach einem der Ansprüche 1 bis 6, wobei die wenigstens eine Variable einen Düsendruck umfasst und wobei der Betriebsparameter einen einstellbaren Gegendruck, der eine Vielzahl von diskreten Sollwerten aufweist, umfasst, wobei der Gegendruck gemäß dem erfassten Düsendruck eingestellt wird.

8. Spritzgießmaschine, umfassend:
eine Einspritzeinheit, die eine Gießform, die einen Gießformhohlraum ausbildet, und eine Schnecke aufweist, die sich von einer ersten Position in eine zweite Position bewegt, wobei die Einspritzeinheit angepasst ist, um ein geschmolzenes Kunststoffmaterial aufzunehmen und über die Schnecke in den Gießformhohlraum einzuspritzen, um ein gegossenes Teil auszubilden;
einen Regler, der angepasst ist, um einen Betrieb der Spritzgießmaschine gemäß einem Einspritzzyklus und einem Rückstellungsprofil zu regeln;
einen Sensor, der mit der Spritzgießmaschine und dem Regler gekoppelt ist, wobei der Sensor angepasst ist, um während des Rückstellungsprofil wenigstens eine Variable zu messen;
wobei der Regler nach Abschluss des Einspritzzyklus das Rückstellungsprofil beginnt, bei dem die Schnecke in die erste Position bewegt wird, wobei der Regler ferner einen Betriebsparameter der Spritzgießmaschine basierend auf der wenigstens einen gemessenen Variable einstellt,
**dadurch gekennzeichnet, dass** die wenigstens eine Variable einen Düsendruck umfasst und der Betriebsparameter einen Gegendruck umfasst, wobei der Gegendruck gemäß dem erfassten Düsendruck eingestellt wird.

9. Spritzgießmaschine nach Anspruch 8, wobei der Betriebsparameter wenigstens eines von einem Gegendrucksollwert oder einer Schneckendrehgeschwindigkeit umfasst.

10. Spritzgießmaschine nach Anspruch 8 oder 9, wobei die wenigstens eine Variable einen Druckbetrag des geschmolzenen Polymers umfasst, das in Richtung einer Düse der Schnecke gedrückt wird.

11. Spritzgießmaschine nach einem der Ansprüche 8 bis 10, wobei die wenigstens eine Variable einen Gegendruckbetrag umfasst.

12. Spritzgießmaschine nach einem der Ansprüche 8 bis 11, wobei der Sensor an einem Vorderende der Schnecke nahe der Düse angeordnet ist und/oder wobei der Sensor an einer Position vor einem Prüfring der Schnecke angeordnet ist.

13. Spritzgießmaschine nach einem der Ansprüche 8 bis 12, wobei die wenigstens eine Variable einen Düsendruck umfasst und wobei der Betriebsparameter einen ununterbrochen variablen Gegendruck umfasst, wobei der variable Gegendruck gemäß dem erfassten Düsendruck eingestellt wird.

14. Nichtflüchtiges computerlesbares Speicherungsmedium, das prozessorausführbare Anweisungen speichert, die, wenn sie ausgeführt werden, die Spritzgießmaschine nach den Ansprüchen 8 bis 13 veranlassen zum:
Einspritzen eines geschmolzenen Polymers in den Gießformhohlraum gemäß dem Einspritzzyklus unter Verwendung einer Schnecke, die sich von einer ersten Position in eine zweite Position bewegt;
nach Abschluss des Einspritzzyklus, Beginnen eines Rückstellungsprofils, bei dem die Schnecke in die erste Position bewegt wird;
Messen, unter Verwendung eines Sensors, wenigstens einer Variablen während des Rückstellungsprofils; und
Einstellen wenigstens eines Betriebsparameters der Spritzgießmaschine basierend auf der wenigstens einen gemessenen Variablen während des Rückstellungsprofils;
**dadurch gekennzeichnet, dass** die wenigstens eine Variable einen Düsendruck umfasst und der Betriebsparameter einen Gegendruck umfasst, wobei der Gegendruck gemäß dem erfassten Düsendruck eingestellt wird.

15. Client-Vorrichtung, umfassend:
einen oder mehrere Prozessoren;
eine oder mehrere Schnittstellen;
die Spritzgießmaschine nach den Ansprüchen 8 bis 13;
einen nichtflüchtigen computerlesbaren Speicher, der darauf Anweisungen speichert, die, wenn sie durch den einen oder die mehreren Prozessoren ausgeführt werden, die Client-Vorrichtung veranlassen zum:
Einspritzen eines geschmolzenen Polymers in den Gießformhohlraum gemäß dem Einspritzzyklus unter Verwendung einer Schnecke, die sich von einer ersten Position in eine zweite Position bewegt;
nach Abschluss des Einspritzzyklus, Beginnen eines Rückstellungsprofils, bei dem die Schnecke in die erste Position bewegt wird;
Messen, unter Verwendung eines Sensors, wenigstens einer Variablen während des Rückstellungsprofils; und
Einstellen wenigstens eines Betriebsparameters der Spritzgießmaschine basierend auf der wenigstens einen gemessenen Variable während des Rückstellungsprofils,
**dadurch gekennzeichnet, dass** die wenigstens eine Variable einen Düsendruck umfasst und der Betriebsparameter einen Gegendruck umfasst, wobei der Gegendruck gemäß dem erfassten Düsendruck eingestellt wird.

## Revendications

1. Procédé permettant de commander une machine de moulage par injection ayant un moule formant une cavité de moule, la machine de moulage par injection étant commandée selon un cycle d'injection, le procédé comprenant :
l'injection d'un polymère fondu dans la cavité de moule selon le cycle d'injection à l'aide d'une vis qui se déplace d'une première position à une seconde position ;
à l'achèvement du cycle d'injection, le commencement d'un profil de rétablissement dans lequel la vis est déplacée à la première position ;
la mesure, à l'aide d'un capteur, d'au moins une variable pendant le profil de rétablissement ; et
l'ajustement d'au moins un paramètre fonctionnel de la machine de moulage par injection en fonction de l'au moins une variable mesurée, pendant le profil de rétablissement
**caractérisé en ce que** l'au moins une variable comprend une pression de buse, et le paramètre fonctionnel comprend une contre-pression, la contre-pression étant ajustée selon la pression de buse captée.

2. Procédé selon la revendication 1, comprenant en outre la création, par un ou plusieurs processeurs, d'un profil de rétablissement variable cible pour un cycle d'injection de la machine de moulage par injection.

3. Procédé selon la revendication 1 ou la revendication 2, dans lequel l'au moins un paramètre fonctionnel comprend au moins l'un parmi un point de consigne de contre-pression ou une vitesse de rotation de vis.

4. Procédé selon l'une quelconque des revendications 1 à 3, dans lequel l'au moins une variable comprend une valeur de pression de polymère fondu étant pressé en direction d'une buse de la vis.

5. Procédé selon l'une quelconque des revendications 1 à 4, dans lequel l'au moins une variable comprend une valeur de contre-pression.

6. Procédé selon l'une quelconque des revendications 1 à 5, dans lequel le capteur est localisé au niveau d'une extrémité avant de la vis près de la buse, et/ou dans lequel le capteur est localisé au niveau d'une position devant une bague de verrouillage de la vis.

7. Procédé selon l'une quelconque des revendications 1 à 6, dans lequel l'au moins une variable comprend une pression de buse, et dans lequel le paramètre fonctionnel comprend une contre-pression ajustable ayant une pluralité de points de consigne distincts, la contre-pression étant ajustée selon la pression de buse captée.

8. Machine de moulage par injection comprenant :
une unité d'injection ayant un moule formant une cavité de moule et une vis qui se déplace d'une première position à une seconde position, l'unité d'injection étant conçue pour recevoir et injecter un matériau plastique fondu dans la cavité de moule par l'intermédiaire de la vis pour former une pièce moulée ;
un organe de commande conçu pour commander le fonctionnement de la machine de moulage par injection selon un cycle d'injection et un profil de rétablissement ;
un capteur accouplé à la machine de moulage par injection et à l'organe de commande, le capteur étant conçu pour mesurer au moins une variable pendant le profil de rétablissement ;
dans laquelle à l'achèvement du cycle d'injection, l'organe de commande commence le profil de rétablissement dans lequel la vis est déplacée à la première position, l'organe de commande ajuste en outre un paramètre fonctionnel de la machine de moulage par injection en fonction de l'au moins une variable mesurée
**caractérisée en ce que** l'au moins une variable comprend une pression de buse, et le paramètre fonctionnel comprend une contre-pression, la contre-pression étant ajustée selon la pression de buse captée.

9. Machine de moulage par injection selon la revendication 8, dans laquelle l'au moins un paramètre fonctionnel comprend au moins l'un parmi un point de consigne de contre-pression ou une vitesse de rotation de vis.

10. Machine de moulage par injection selon la revendication 8 ou la revendication 9, dans laquelle l'au moins une variable comprend une valeur de pression de polymère fondu étant pressé en direction d'une buse de la vis.

11. Machine de moulage par injection selon l'une quelconque des revendications 8 à 10, dans laquelle l'au moins une variable comprend une valeur de contre-pression.

12. Machine de moulage par injection selon l'une quelconque des revendications 8 à 11, dans laquelle le capteur est localisé au niveau d'une extrémité avant de la vis près de la buse, et/ou dans laquelle le capteur est localisé au niveau d'une position devant une bague de verrouillage de la vis.

13. Machine de moulage par injection selon l'une quelconque des revendications 8 à 12, dans laquelle l'au moins une variable comprend une pression de buse, et dans laquelle le paramètre fonctionnel comprend une contre-pression variable de façon continue, la contre-pression variable étant ajustée selon la pression de buse captée.

14. Support de stockage non transitoire lisible par ordinateur stockant des instructions exécutables par processeur qui, lorsqu'elles sont exécutées, amènent la machine de moulage par injection selon les revendications 8 à 13 à :
injecter un polymère fondu dans la cavité de moule selon le cycle d'injection à l'aide d'une vis qui se déplace d'une première position à une seconde position ;
à l'achèvement du cycle d'injection, commencer un profil de rétablissement dans lequel la vis est déplacée à la première position ;
mesurer, à l'aide d'un capteur, au moins une variable pendant le profil de rétablissement ; et
ajuster au moins un paramètre fonctionnel de la machine de moulage par injection en fonction de l'au moins une variable mesurée, pendant le profil de rétablissement ;
**caractérisé en ce que** l'au moins une variable comprend une pression de buse, et le paramètre fonctionnel comprend une contre-pression, la contre-pression étant ajustée selon la pression de buse captée.

15. Dispositif client comprenant :
un ou plusieurs processeurs ;
une ou plusieurs interfaces ;
la machine de moulage par injection selon les revendications 8 à 13 ;
une mémoire non transitoire lisible par ordinateur stockant sur celle-ci des instructions qui, lorsqu'elles sont exécutées par le ou les processeurs, amènent le dispositif client à :
injecter un polymère fondu dans la cavité de moule selon le cycle d'injection à l'aide d'une vis qui se déplace d'une première position à une seconde position ;
à l'achèvement du cycle d'injection, commencer un profil de rétablissement dans lequel la vis est déplacée à la première position ;
mesurer, à l'aide d'un capteur, au moins une variable pendant le profil de rétablissement ; et
ajuster au moins un paramètre fonctionnel de la machine de moulage par injection en fonction de l'au moins une variable mesurée, pendant le profil de rétablissement
**caractérisé en ce que** l'au moins une variable comprend une pression de buse, et le paramètre fonctionnel comprend une contre-pression, la contre-pression étant ajustée selon la pression de buse captée.
